# EUROPEAN PATENT APPLICATION

(11) **EP 2 219 020 A1**
(43) Date of publication of application: **18.08.2010**
(21) Application number: 08853723.8
(22) Date of filing: 28.10.2008
(51) Int. Cl.: G01N 11/04, G01N 33/49

(54) **BLOOD FLUIDITY MEASUREMENT SYSTEM AND BLOOD FLUIDITY MEASUREMENT METHOD**

(30) Priority: 28.11.2007 JP 2007306969; 04.07.2008 JP 2008175489
(71) Applicant: Konica Minolta Opto, Inc., Hachioji-shi Tokyo 192-8505 (JP)
(72) Inventor: ICHITANI, Shuji, Hino-shi Tokyo 191-8511 (JP); TAKAMA, Masaaki, Hachioji-shi Tokyo 192-8505 (JP); MURAYAMA, Takanori, Hachioji-shi Tokyo 192-8505 (JP)
(74) Representative: Tyson, Robin Edward
(86) International application number: PCT/JP2008/069528
(87) International publication number: WO 2009/069417

(57) **Abstract**

Blood fluidity is measured in a short time. A blood fluidity measurement system (1), which measures blood fluidity by flowing blood into a channel, is equipped with a TV camera (6) which photographs the blood stream in the channel and an image processing part (7) which detects the state of the blood stream in the channel as blood fluidity from the image taken by the TV camera (6).

## Description

### TECHNICAL FIELD

The present invention relates to a blood fluidity measurement system and a blood fluidity measurement method.

### BACKGROUND TECHNOLOGY

In recent years, along with increasing awareness of health, blood fluidity has been paid attention as a health barometer. The fluidity is also called as the degree of smoothness, and it means that the higher the fluidity or the smoothness, the better in health.

As a method for investigating the above blood fluidity, it has been known that, as described for example in Patent Document 1, blood is allowed to pass through a filter with fine grooves, and the time required for passing through the filter is measured. Further, it is also possible for the method of Patent Document 1 to grasp visually the blood fluidity by observing with a camera blood cells passing through the filter using a filter substrate made of a transparent glass.
Patent Document 1: Japanese Patent No. 2685544

### DISCLOSURE OF INVENTION

### ISSUES TO BE SOLVED BY THE INVENTION

However, with the method described in Patent Document 1, it is required to measure the time taken for a prescribed amount of blood to fully pass through a filter, and the measurement takes a lot of time.

The present invention has been achieved in consideration of the above issue, and it is an object of the invention to provide a blood fluidity measurement system and a blood fluidity measurement method, which can measure the blood fluidity in a short time.

### MEASURES TO SOLVE THE ISSUES

To solve the above-described issue, the invention described in Claim 1 is a blood fluidity measurement system to measure the aforesaid blood fluidity by flowing blood in a channel, wherein the blood fluidity measurement system is provided with a means of taking a picture of blood flow in the above channel, and a detection means for the state of blood flow to detect the state of blood flow in the above channel, as blood fluidity, from an image obtained by the above means of a taking picture.

The invention described in Claim 2 is a blood fluidity measurement system described in Claim 1, wherein the above channel has a plurality of gates formed with a narrower width than a blood cell size, the above means of taking a picture takes a picture of blood flow at an exit area of at least one of the above gates, and the above detection means for the state of blood flow detects the state of blood flow at the above exit area, as blood fluidity.

The invention described in Claim 3 is a blood fluidity measurement system described in Claim 2, wherein the above detection means for the state of blood flow detects motions of blood cells in blood at the above exit area, and then, obtains the speed vector of the aforesaid blood cells as the above state of blood flow.

The invention described in Claim 4 is a blood fluidity measurement system described in Claim 2, wherein the above detection means for the state of blood flow detects a boundary as a line between a portion containing blood cells and a portion without a blood cell among the above exit areas, and then, obtains an angle between the aforesaid line and a center line of the above gate, as the above state of blood flow.

The invention described in Claim 5 is a blood fluidity measurement system described in Claim 2, wherein the above detection means for the state of blood flow recognizes the both areas of a portion containing blood cells and a portion without a blood cell among the above exit areas by different colors of each area, and obtains an area ratio of the aforesaid both areas as the above state of blood flow..

The invention described in Claim 6 is a blood fluidity measurement system described in any one of Claims 3 to 5, wherein the blood fluidity measurement system is provided with a conversion means, which converts the above state of blood flow into the time required for the prescribed amount of blood passing through the above gate, transformability of a blood cell, or viscosity of blood.

The invention described in Claim 7 is a blood fluidity measurement system described in Claim 1, wherein the above channel has a stress change area, which affects blood existing in the interior, and the above means of taking a picture takes a picture of the blood flow in front of and behind the above change area in the direction of the blood flow.

The invention described in Claim 8 is a blood fluidity measurement system described in Claim 7, wherein the above channel has a small size channel, whose internal size is smaller than a blood cell size, and large size channels, which are arranged in front of and behind the above small size channel in the direction of the blood flow and have a larger cross section than that of the aforesaid small size channel, and the above change area is a joining part between the above small size channel and the above large size channel.

The invention described in Claim 9 is a blood fluidity measurement system described in Claim 7 or Claim 8, wherein the above detection means for the state of blood flow obtains, as the above state of blood flow, at least one of blood speed, blood direction, and a degree of aggregation of blood cells in front of and behind the above change area.

The invention described in Claim 10 is a blood fluidity measurement system described in any one of Claims 7 to 9, wherein, by joining the first substrate having fine grooves on its surface and the second substrate having a flat surface part and making a close contact with the surface of the first substrate, the above channel is a space formed by the above fine groove and the above flat surface part.

The invention described in Claim 11 is a blood fluidity measurement system described in any one of Claims 7 to 9, wherein, by joining or pressure bonding the first substrate, in which a plurality of hollows, each of which hollows has an inflow entrance at one end and an outflow exit at the other end, are arranged side by side, has fine grooves communicating with the above hollows each other at wall parts, which divide the above hollows each other in the direction almost perpendicular to a straight line between the above inflow entrance and the above outflow exit, and the second substrate having a flat surface part and making a close contact with the surface of the above first substrate, the above channels are spaces formed by the above hollows and the above fine grooves.

The invention described in Claim 12 is a blood fluidity measurement method, wherein the blood fluidity measurement method measures blood fluidity using the blood fluidity measurement system described in any one of Claims 1 to 11.

### EFFECTS OF THE INVENTION

According to the invention described in Claim 1, since there are provided a means of taking a picture, which takes a picture of blood flow in a channel, and a detection means for the state of blood flow to detect as blood fluidity the state of blood flow in the above channel from an image obtained by the means of a taking picture, the blood fluidity can be detected at any time, if the image is timely taken by the above means of taking a picture. Therefore, compared to a conventional case, in which the time taken for a prescribed amount of blood to fully pass through a filter was measured, the blood fluidity can be measured in a short time.

According to the invention described in Claim 2, since there are provided a means of taking a picture, which takes a picture of blood flow at an exit area of a gate, and a detection means for the state of blood flow to detect as blood fluidity the state of blood flow at the above exit area from an image obtained by the means of a taking picture, the blood fluidity can be detected at any time, if the image is timely taken by the above means of taking a picture. Therefore, compared to the conventional case, in which the time taken for a prescribed amount of blood to fully pass through a filter was measured, the blood fluidity can be measured in a short time.

According to the invention described in Claim 6, since there is provided a conversion means which converts the above state of blood flow into the time required for the prescribed amount of blood passing through a gate, transformability of a blood cell, or viscosity of blood, the state of blood flow, such as the above-described speed vector, angle, and area ratio, can be converted to other representative parameters showing the blood fluidity such as the time required to pass through the gate, transformability of a blood cell, or viscosity of blood, whereby a broader range of blood diagnosis can be conducted.

According to the invention described in Claim 7, since the channel has the stress change area, which affects blood existing in the interior, and the means of taking a picture takes a picture of blood flow in front of and behind the above change area in the direction of the blood flow, the state of blood flow can be detected at positions where aggregation is likely to occur. Therefore, the various aspects of the state of blood flow can be detected.

According to the invention described in Claim 8, a channel is arranged in a small size channel, whose inner size is smaller than a blood cell size, and in front of and behind the small size channel in the direction of the blood flow, and has a large size channel, whose cross section is larger than that of the aforesaid small size channel, and a change area is a joining part between the small size channel and the large size channel. Therefore, the above channel reproduces a stress change area of blood in a blood vessel in a pseudo manner, whereby the state of blood flow can be detected in front of and behind the change area.

### BRIEF DESCRIPTION OF DRAWINGS

Fig. 1 is a schematic constitution diagram of a blood fluidity measurement system according to an embodiment of the present invention.
Fig. 2 is a cross section of a filter according to an embodiment of the present invention.
Fig. 3a is a partial top view of a gate according to an embodiment of the present invention, and Fig. 3b is a side view when viewed from a downstream side of the gate.
Fig. 4a is a still picture in moving images of blood flow in case where healthy blood is flowed, and Fig. 4b is a figure showing motions of blood cells in the moving images in terms of a speed vector.
Fig. 5a is a still picture in moving images of blood flow in case where blood having a low degree of health is flowed, and Fig. 5b is a figure showing motions of blood cells in the moving images in terms of a speed vector.
Fig. 6 is a flow chart of steps in which moving images of blood flow is processed to investigate fluidity.
Fig. 7 is a figure showing an example, in which speed vectors were determined.
Fig. 8a is a figure showing an example in case where angle θ regarding healthy blood is determined, and
Fig. 8b a figure showing an example in case where angle θ regarding blood having a low degree of health is determined.
Fig. 9a is a figure showing an example in case where an area ratio R regarding healthy blood is determined, and Fig. 9b a figure showing an example in case where the area ratio R regarding blood having a low degree of health is determined.
Fig. 10 is a figure showing an example of a conversion data owned by a conversion means.
Fig. 11 is a figure showing a microchip according to the second modified example of an embodiment;
Fig. 11a is a plan, Fig. 11b is a separated side view, and Fig. 11c is a partially enlarged view of Fig. 11a.
Fig. 12 is a figure to explain a channel of a microchip, and the upper figure is a plan and the lower figure is a side view.
Fig. 13 is a figure on a display showing an example displaying calculated speed vectors.
Fig. 14 is a figure showing an example, in which blood flow images are processed and aggregation parts in each gate area were determined.

### DESCRIPTION OF ALPHANUMERIC DESIGNATIONS

1,1 A, and 1B: a blood fluidity measurement system
6, 6A, and 1B: a TV camera (a means for taking a picture)
7: an image processing part (a detection means for the state of blood flow)
20B: a glass flat board (the second substrate)
21 B: a base board (the first substrate)
26B: a channel
30, 215B: a gate
81: a conversion means
210B, 211B: a hollow part
210Ba, 211Ba: a pass-through opening (an inflow entrance, and an outflow exit)
C: an exit area
H: a change area
R: an area ratio
V: a speed vector
θ: an angle

### BEST MODE FOR CARRYING OUT THE INVENTION

Embodiments of the present invention will hereinafter be described with reference to figures.

### [Embodiment of the Present Invention]

First, regarding the blood fluidity measurement system according to the present invention, an outline of a constitution thereof will be described.

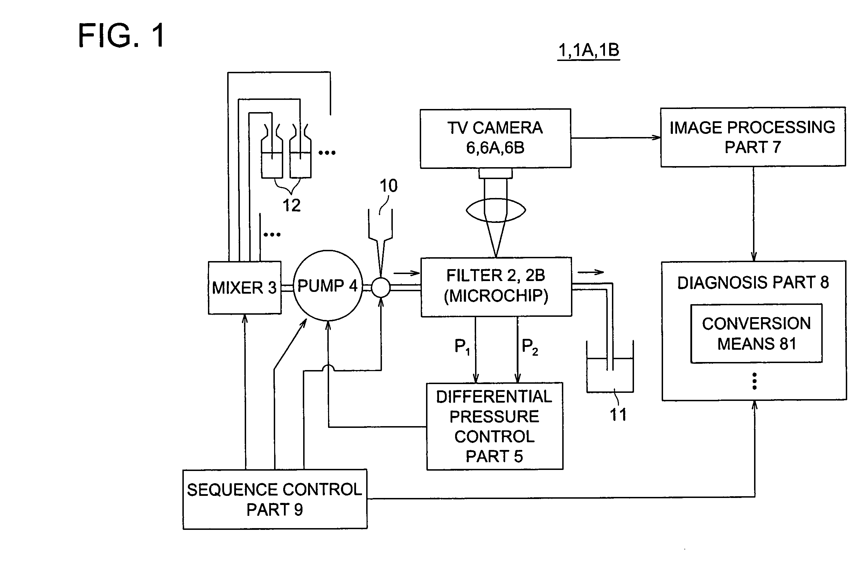

Fig. 1 shows a constitution diagram of a blood fluidity measurement system 1 according to an embodiment of the present invention. The blood fluidity measurement system 1 is a system, which introduces blood injected from an inlet 10 into a discharge part 11 through a filter 2 (also referred to as a microchip), and investigates blood fluidity using information obtained from the above process. The aforesaid system is provided with a TV camera 6 as a means of taking a picture to take a picture of blood flow in the filter 2, an image processing part 7 as a detection means of the state of blood flow to detect the state of blood flow from moving images taken by the above TV camera 6, and a diagnosis part 8 to diagnose the above state of blood flow.

Further, the blood fluidity measurement system 1 not only introduces blood to the filter 2 as it is, but also is provided with a plurality of solution bottles 12 connected to a channel through a mixer 3 for the purpose of introducing blood to the filter 2 after mixing the blood with other solutions such as a physiological salt solution, and a physiological active substance. Blood and others, which are introduced to the filter 2, are designed so that the desired amount of blood and others are flowed, by controlling a pump 4 with a differential pressure controlling part 5 to regulate differential pressure in front of and behind the filter 2. The mixer 3, the pump 4, a valve of the inlet 10, and the diagnosis part 8 are integrated and controlled by a sequence control part 9. Above each part of the blood fluidity measurement system 1 may be arranged in an integrated fashion as one apparatus, or may be arranged as individual devices connected with each other.

Next, of the constituent elements of the above-described blood fluidity measurement system 1, major ones will be detailed.

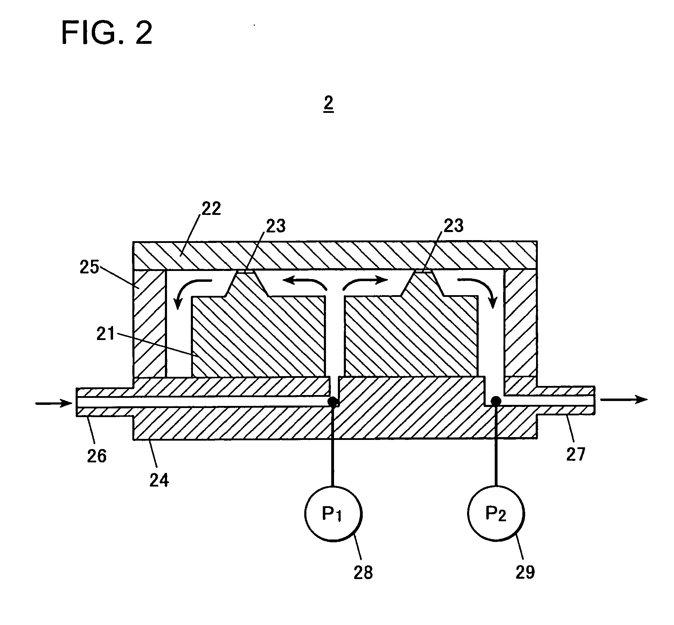

The filter 2 is provided with apertures 23 composed of a group of fine channels between a silicon single crystal substrate 21 and a glass flat board 22, as shown in a cross section of Fig. 2. In order to introduce blood into the above opening 23 and then discharge the blood, a base board 24 and an external cylinder 25 are arranged. The base board 24 has a feed port 26 and an outlet 27 of blood, and the blood flows following arrows in the figure. Each pressure in front of and behind the opening 23 is detected by pressure sensors 28 and 29, and pressure signals P1 and P2 caused by the pressures are sent to the differential pressure control part 5 shown in Fig. 1.

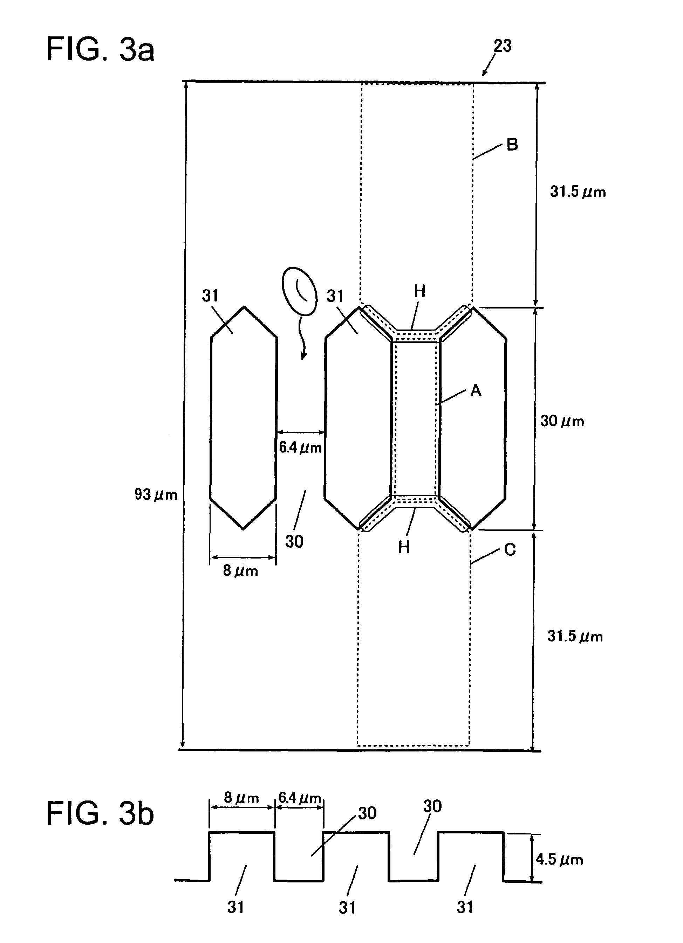

The opening 23 owned by the filter 2 is, as shown in Figs. 3a and 3b, provided with a lot of gates 30 formed as a part sandwiched between two hexagonal banks 31. The above gate 30 forms an interior area A, an entrance area B, and an exit area C, and has a stress change area H, which affects blood, in these transition parts. The term stress means a physical force caused in blood. Fig. 3a is a top view of a part of the opening 23 when viewed from glass flat board 22, and Fig. 3b is a side view of opening 23 when viewed from a downstream side. Fig. 3 is an enlarged figure of an extent corresponding to two gates 30, and openings 23 according to an embodiment of the present invention are provided with 7,854 gates 30 in total. The upper surface of bank 31 is made flat, and is joined with the glass flat board 22, not shown in Fig. 3. Constituents in blood introduced from the feed port 26, for example blood cells, pass down through the gate 30 of Fig. 3a while being transformed. The above opening 23 is formed in the sizes shown in Figs. 3a and 3b, but is not particularly limited to them. However, the width of the gate 30 (6.4 µ m in Fig. 3a) is required to be smaller than the size of an object, in which transformation is observed, for example a blood cell size of a red blood cell (about 8 µ m).

The TV camera 6 is, for example, a digital CCD camera, and a high-speed camera with a flame rate of 3,000 fps (frame per second) having enough resolution to take moving images of blood flow. The above TV camera 6 is arranged at the upper part of the filter 2, and takes pictures, from a side of the glass flat board 22, of blood flow passing through the opening 23. The extent of taking a picture may, as shown in Fig. 3a, be an extent including the internal area A, the entrance area B, and the exit area C of at least one of the gates 30, and, according to an embodiment of the present invention, the extent includes each area of a plurality of gates 30. However, in order to determine blood fluidity, the extent may include at least the exit area C, as is described later. The entrance area B and the exit area C are not limited to the extents shown in Fig. 3a, and they may be the same extents as used in a measurement of the state of blood flow of comparative blood. It is designed that the moving pictures of blood flow obtained by the TV camera 6 can be displayed on a display, not illustrated. The above TV camera may be a camera for taking a still picture.

The image processing part 7 is provided with an analytical means such as a CPU or a memory means such as a semiconductor memory, and is electrically connected with the TV camera 6. The image processing part 7 processes moving pictures of blood flow obtained by the TV camera 6, and detects, as blood fluidity, the state of blood flow at the exit area C of the gate 30. The specific states of blood flow detected by the above image processing part 7 indicate a speed vector V of blood cells, an angle θ showing a direction of a boundary between a portion containing blood cells and a portion without a blood cell, and the area ratio R of the above both portions. However, the image processing part 7 can detect, as the state of blood flow, at least one change in a blood speed, a direction of blood flow, and a degree of aggregation of blood cells in front of and behind the change area H. The image processing part 7 is arranged to detects at least one of these states of blood flow depending on the degree of definition of moving pictures of blood, and, in an embodiment of the present invention, it is made to detect the speed vector V. The detected state of blood flow is designed to be displayed on a display, which is not illustrated.

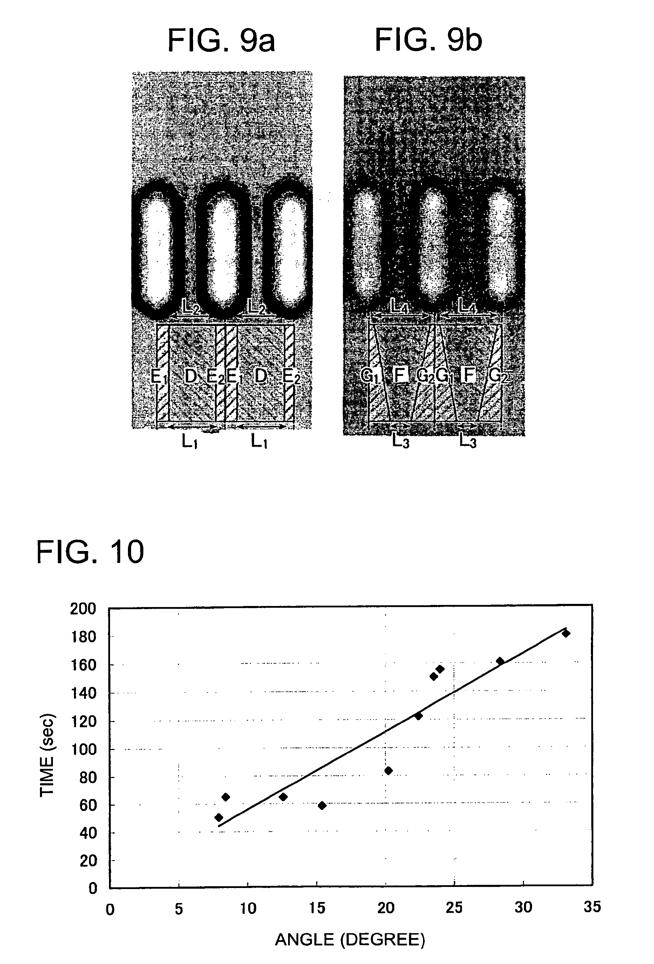

A diagnosis part 8 is provided with a conversion means 81, which converts the state of blood flow detected by the image processing part 7 into other fluidity parameters, in addition to an analytical means such as a CPU or a memory means such as a semiconductor memory, and is electrically connected with the image processing part 7. The specific fluidity parameters converted from the state of blood flow indicate the time required for the prescribed amount of blood passing through the gate 30, transformability of a blood cell, or viscosity of blood. The conversion means 81 has, for example, a conversion table as shown in Fig. 10, to be described later, which table converts the state of blood flow into a fluidity parameter. Fig. 10 is a table converting the angle θ into the time for which blood passes through the gate 30. The diagnosis part 8 converts the state of blood flow into any one of fluidity parameters, and at the same time, diagnoses the degree of health of blood using the above state of blood flow or fluidity parameter. The diagnosis part 8 is provided with data which are necessary for judging the degree of health of blood. The fluidity parameters or the results of diagnosis are designed to be displayed on a display, which is not illustrated. The diagnosis part 8 may be constituted in an integrated fashion with the image processing part 7 using a PC or other means. Further, the fluidity parameters converted by the conversion means 81 may be other values showing properties and condition of blood, or a quantitative value of a specific disease state.

Next, a blood fluidity measurement method via the blood fluidity measurement system 1 according to an embodiment of the present invention will be described.

First, steps until a step of taking a picture of blood flow after blood is flowed in the filter 2 will be described.

First, blood for measurement is charged into the inlet 10, and at the same time, a physiological salt solution or others is added to a solution bottle 12, as needed. Then, blood and a physiological salt solution or others (hereinafter, referred to as blood) are flowed to the filter 2 by putting differential pressure on the filter 2, and at the same time, pictures of blood flow passing through the gate 30 are taken by the TV camera 6.

At this time, for example, if differential pressure of 10 to 30 cmAq is put on the filter 2, it takes 30 to 180 seconds for blood of 100 µl to flow. Therefore, the speed of blood flowing 7,854 gates 30 having a cross section of 6.4 µm x 4.5 µm shown in Figs. 3a and 3b is 2.46 to 14.7 µm/ms (=100/(6.4 x 4.5 x 7,854)/(180 to 30) x 10⁶), and then, blood advances 0.82 to 4.9 µm (= (2.46 to 14.7)/3,000 x 10³) during taking one frame by the TV camera 6 of 3,000 fps. Since this distance is shorter than the length of 31.5 µm in the outflow direction at the exit area C of the gate 30, an identical blood cell can be recognized in successive plural frames.

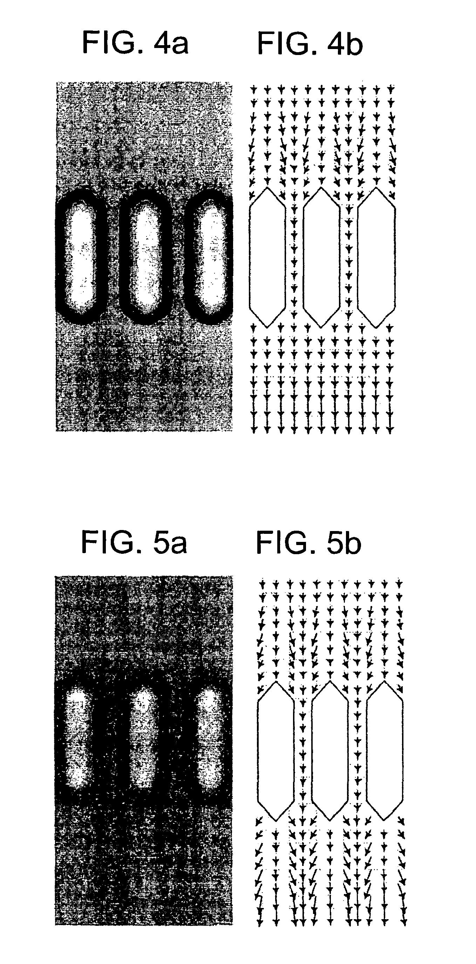

Examples of moving pictures of blood flow taken in this way are shown in Figs. 4 and 5. Fig. 4 shows an example of a case where healthy blood is flowed, and Fig. 5 shows an example of a case where blood having a low degree of health is flowed. In both Figs. 4 and 5, (a) shows a still picture in actual moving pictures, and (b) displays motions of blood cells in moving pictures with speed vectors by a method, which will be described later. In case where healthy blood is flowed, as shown in Fig. 4, in the exit area C after blood being passed through the gate 30, blood is in a fashion of a uniform linear flow. On the other hand, in case where blood having a low degree of health is flowed, as shown in Fig. 5, in the exit area C, a part of the blood flows obliquely with the blood being angled.

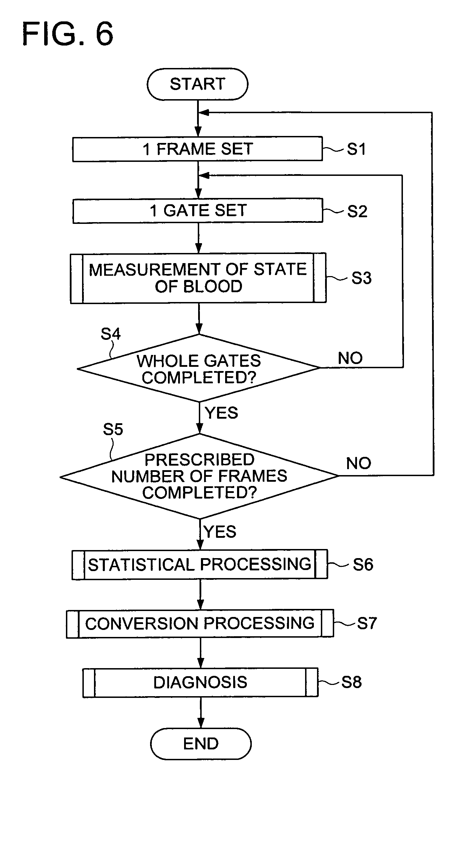

Next, a process, in which images of moving pictures of blood flow are processed to investigate the fluidity, will be described. This process is executed following steps shown in Fig. 6.

First, each of frames in moving pictures of blood flow is sampled, and a frame to be processed is set (S1). Then, one of the gates 30 to be inspected is similarly set (S2).

After that, the state of blood flow at the exit area C of the gate 30 is measured (S3). At this step, the states of blood flow of different types are measured for each of cases where behavior of blood cells at the exit area C can be captured or not, based on a frame rate of the TV camera 6.

In case where the behavior can be captured, that is, as an embodiment of the present invention, identical blood cell can be recognized in successive frames at the exit area C, as the state of blood flow, the speed vector of a blood cell can be determined. The method for determining the above speed vector can be a method for making a two-dimensional speed map of blood cells as described, for example, in Japanese Patent Applications No. 2001-264318 or No. 2006-223761, or can be other methods. However, since at least two successive frames are required to determine the speed vector, the aforesaid speed vector can be determined by a cycle including step S5, which will be described later, in which similar processing on another one frame is carried out.

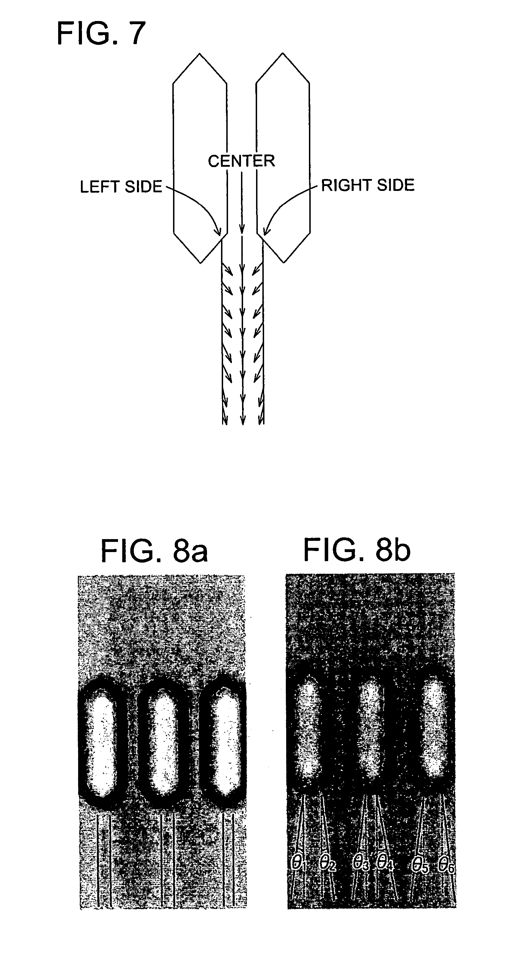

Examples of the speed vector thus determined are shown in Fig. 7 and Table 1. Fig. 7 and Table 1 show results of the speed and the angle at positions on the center line and at left and right positions of each of the positions of the line of the gate 30. The angle is defined as zero degree in the blood flow direction (downward direction of Fig. 7), and anti-clockwise is defined as plus and clockwise is defined as minus, when viewed from a front part. However, these Fig. 7 and Table1 are examples, in which the speed vectors were determined on the total gates 30 and the total frames by way of steps S4 and S5 of Fig. 6, which will be described later. Since a blood cell on the center line of the gate 30 flows straight independent of its degree of health, the determination can be carried out on only blood cells located on the left and right, to grasp the degree of health based on the angle. The positions of the left and right are not particularly limited, as long as they are located in the extent of the exit area C.

**Table 1**

| Gate No., | Speed (µm/msec) | | | Angle (degree) | | |
|---|---|---|---|---|---|---|
| | Left side | Center | Right side | Left side | Center | Right side |
| 1 | 2.4 | 2.4 | 2.4 | 10 | 0 | -9 |
| 2 | 2.6 | 2.6 | 2.6 | 12 | 0.1 | -10 |
| 3 | 2.5 | 2.5 | 2.5 | 8 | 0.2 | -12 |
| 4 | 3.0 | 3.0 | 3.0 | 10 | -0.1 | -7 |
| 5 | 2.2 | 2.2 | 2.2 | 7 | 0.1 | -8 |
| . . . | . . . | . . . | . . . | . . . | . . . | . . . |
| . . . | . . . | . . . | . . . | . . . | . . . | . . . |
| Average | 2.5 | 2.5 | 2.5 | .9 | 0.1 | -10 |
| Dispersion | 0.4 | 0.4 | 0.4 | 0.1 | 0.01 | 0.4 |

The above-described speed vectors can at any time be determined, if at least two frames of moving pictures of blood flow are taken by the TV camera 6. Therefore, it is not necessary to measure the time of the prescribed amount of blood passing through a filter as is the conventional method, resulting in enabling in the measurement to be completed in a short time.

After completion of the above-described measurement of the state of blood flow (S3 of Fig. 6), the similar measurement is carried out for the whole gates 30 (S4), and after that, the measurements of the state of blood flow on the whole gates 30 are carried out on the prescribed number of frames (S5). Then, a statistical processing of the obtained states of blood flow is carried out (S6). This is a processing for obtaining representative values of the state of blood flow, by for example calculating an average value or dispersion of values on the whole gates 30 and the prescribed number of frames. However, the above statistical processing may be carried out only for a minimum number of frames, in which blood flow is stable. With this, it is not necessary to process the whole moving pictures of blood flow, in which the prescribed amount of blood flows, resulting in enabling in the measurement of the state of blood flow to be completed in a short time.

Next, a conversion processing of the state of blood flow, in which a statistical processing was completed, is carried out (S7). This processing is executed by the conversion means 81, with which the diagnosis part 8 is provided. The conversion means 81 converts the speed vector determined as the state of blood flow to other fluidity parameters such as the time required for the blood passing through the gate 30, transformability of a blood cell, or viscosity of blood. This conversion is executed with reference to conversion data owned by the conversion means 81.

With such conversion means 81, the speed vector V as the state ofblood flow can be converted to other representative parameters showing the blood fluidity such as the time required for the blood passing through a gate, transformability of a blood cell, or viscosity of blood, whereby a broader range of blood diagnosis can be conducted.

Lastly, the diagnosis part 8 makes a diagnosis of the states of blood flow or fluidity parameters converted from the states of blood flow (S8). In case where this diagnosis is made of the fluidity parameters, the degree of health of blood is judged based on criteria owned by the diagnosis part 8. In case where this diagnosis is made of the states of blood flow, that is, the speed vector V, it may be judged that when for example the angle of the speed vector V is zero degree, blood is healthy, and the larger the angle, the lower the degree of health. At this time, each of angles of a plurality of blood cells may be evaluated, or one representative blood cell may be evaluated.

As stated above, according to blood the fluidity measurement system 1 according to an embodiment of the present invention, the above system is provided with the image processing part 7, which detects the state of blood flow in the aforesaid channel (the exit area C) as fluidity of blood using the TV camera 6, which takes a picture of blood flow in a channel (the exit area C of at least one of gates 30) and images obtained by the TV camera 6. So, the speed vectors can at any time be determined as the state of blood flow, if at least two framers of moving pictures of blood flow are taken by the TV camera 6. Therefore, it is not necessary to measure the time of the prescribed amount of blood passing through a filter as is the conventional method, resulting in enabling in the measurement to be completed in a short time.

Further, since the above system is provided with the conversion means 81, the speed vector V as the state of blood flow can be converted to other representative parameters showing the blood fluidity such as the time required for the blood passing through a gate, transformability of a blood cell, or viscosity of blood, whereby a broader range of blood diagnosis can be conducted.

### [The First Modified Example of the Embodiment]

Subsequently, the first modified example of the blood fluidity measurement system 1 will be described. Any constituent element similar to the above embodiment will be denoted by the same reference numerals, and their descriptions will be omitted.

A blood fluidity measurement system 1A is, as shown in Fig. 1, provided with a TV camera 6A in place of the TV camera 6 in the above-described embodiment. The TV camera 6A is a camera for taking moving pictures with a frame rate of 30 fps.

A blood fluidity measurement method via the above blood fluidity measurement system 1A will be described.

First, steps until a step of taking a picture of blood flow after blood is flowed in the filter 2 are similar to those described in the above-described embodiment. However, in this modified example, even if the speed of blood flowing the gate 30 is 2.46 to 14.7 µm/ms, which is the same as that of the above-described embodiment, because of the frame rate of the TV camera 6A being small as 30 fps, blood advances as much as 81.9 to 491 µm (=(2.46 to 14.7)/30 x 10³) during taking one frame by this TV camera 6A. Since this distance is longer than the length of 31.5 µm in the outflow direction at the exit area C, an identical blood cell cannot be recognized in successive frames.

Next, a process, in which images of moving pictures of blood flow are processed to investigate the fluidity, will be described. This process is executed following steps shown in Fig. 6 in a similar manner to the above-described embodiment.

First, each of frames in moving pictures of blood flow is sampled, and a frame to be processed is set (S1). Then, one of the gates 30 to be inspected is similarly set (S2).

After that, the state of blood flow at the exit area C of the gate 30 is measured (S3). In this modified example, as stated above, an identical blood cell cannot be recognized in successive frames at the exit area C. In such a case, the angle θ showing a direction of a boundary between a portion containing blood cells and a portion without a blood cell among the exit areas C, or the area ratio R of the above both portions can be determined as the state of blood flow. If the parameters are the angle θ or the area ratio R, the above parameters can be determined from one piece of still picture, that is, one frame of moving pictures, as described below.

The Angle θ is determined as follows: first, by executing enhancement or a binary processing of a boundary between a portion containing blood cells and a portion without a blood cell on the exit area C of an image, an approximate line of the boundary is determined. For this purpose, conventional methods such as the minimum square method and the linear Hough method may be used. Then, from a slope of the straight line thus obtained, an angle between a center line of the gate 30, which is a reference line, and the aforesaid straight line is calculated as the angle θ to be determined.

If the blood is healthy, the angle θ thus determined is close to zero, as shown in Fig. 8a, and if a degree of health of blood is low, the angle θ becomes large, as shown in Fig. 8b.

The area ratio R is determined in the following way: first, a binary processing for different colors is carried out for the exit area C of an image. This process is carried out based mainly on difference of color density. With this processing, as shown in Figs. 9a and 9b, portions containing blood cells and portions without a blood cell can be differentiated from each other as portions with high color density (D and F) and portions with low color density (E and G), respectively. Here, Fig. 9a shows an example of a case where healthy blood is flowed, and Fig. 9b shows an example of a case where blood with a low degree of health is flowed. Then, a ratio of the area of portions containing blood cells to the whole area is calculated as the area ratio R to be obtained. Namely, in Fig. 9a, R=D/(E₁+D+E₂), and in Fig.9b, R=F/(G₁+F+G₂). As shown in Fig. 9, it is not necessary that a region, where color is differentiated, strictly agrees with the exit area C, and the region may be compared to the same region of comparative blood. However, it is preferable that, when the longer region is selected in outflow direction, a greater difference is easily made between values of the area ratio R depending on the degree of health of blood.

In place of the above-described area ratio R, a representative length L may be determined as the state of blood flow. As the representative length L, a lower side of a portion containing blood cells, that is, L₁ or L₃ shown in Fig. 9a or Fig. 9b, may be used as it is. Further, in place of the representative length L, a ratio between upper side and lower side of a portion containing blood cells, that is, L₁/L₂ or L₃/L₄ in Fig. 9a or Fig. 9b, may be determined as the state of blood flow.

It is possible to determine at any time the above-described angle θ and area ratio R, if at least one frame of the moving pictures of blood flow is taken by the TV camera 6. Therefore, it is not necessary to measure the time of the prescribed amount of blood passing through a filter as is the conventional method, resulting in enabling in the measurement to be completed in a short time.

After completion of the above-described measurement of the state of blood flow (S3 of Fig. 6), steps from the similar measurement to the similar statistical processing (S4 to S6) for the whole gates 30 are carried out in the similar manner to the above-described embodiment.

Next, a conversion processing of the state of blood flow, in which a statistical processing was completed, is carried out (S7). This processing is executed by the conversion means 81, with which the diagnosis part 8 is provided. The conversion means 81 converts at least one of the angle θ and area ratio R determined as the state of blood flow to other fluidity parameters such as the time required for the blood passing through the gate 30, transformability of a blood cell, or viscosity of blood. This conversion is executed with reference to conversion table owned by the conversion means 81, as shown for example in Fig. 10. Fig. 10 is a table, which converts the angle θ into the time, for which blood passes through the gate 30.

With such the conversion means 81, the angle θ and area ratio R as the state ofblood flow can be converted to other representative parameters showing the blood fluidity such as the time required for the blood passing through a gate, transformability of a blood cell, or viscosity of blood, whereby a broader range of blood diagnosis can be conducted.

Lastly, the diagnosis part 8 makes a diagnosis of the states of blood flow or fluidity parameters converted from the states of blood flow (S8). In case where this diagnosis is made of the fluidity parameters, the degree of health of blood is judged based on criteria owned by the diagnosis part 8. For the state of blood flow, the diagnosis is made as follows: with regard to the angle θ, it may be judged that when for example its value is zero degree, blood is healthy, and the larger the angle, the lower the degree of health. With regard to the area ratio R, it may simply be that the smaller the ratio, the lower the degree of health, or it may be judged by using a ratio between the area ratio R of healthy blood and the area ratio R of blood to be inspected. However, in case where a ratio with healthy blood is used, it is necessary that the exit area C has the same region for both measurements. With regard to the representative length L, a judgment can be made in the similar manner to the area ratio R.

As stated above, according to the blood fluidity measurement system 1A, the angle θ and area ratio R as the state of blood flow can at any time be determined as the state of blood flow, if at least one frame of moving pictures of blood flow is taken by the TV camera 6A. Therefore, it is not necessary to measure the time of the prescribed amount of blood passing through a filter as is the conventional method, resulting in enabling in the measurement to be completed in a short time.

Further, since the above system is provided with the conversion means 81, the angle θ and area ratio R as the state of blood flow can be converted to other representative parameters showing the blood fluidity such as the time required for the blood passing through a gate, transformability of a blood cell, or viscosity of blood, whereby a broader range of blood diagnosis can be conducted.

### [The Second Modified Example of the Embodiment]

Subsequently, a blood fluidity measurement system 1B as the second modified example of the blood fluidity measurement system 1 will be described. Any constituent element similar to the above embodiment will be denoted by the same reference numerals, and their descriptions will be omitted.

The blood fluidity measurement system 1B is, as shown in Fig.1, provided with a microchip 2B in place of the filter 2, and a TV camera 6B in place of the TV camera 6 in the above-described embodiment.

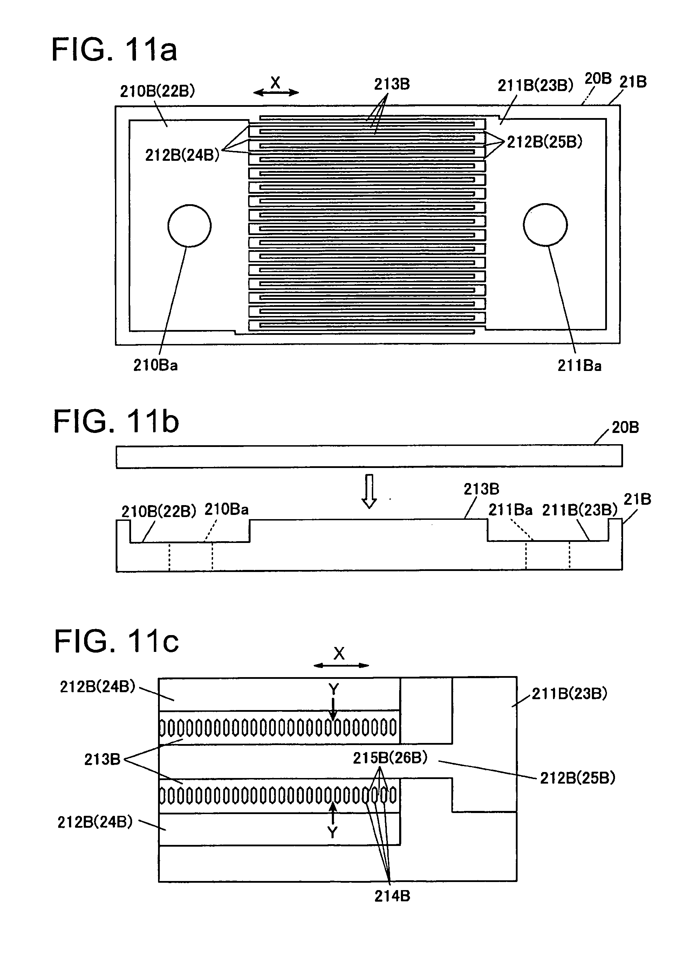

The microchip 2B is, as shown in Fig. 11, formed by stacking a rectangular glass flat board 20B and a base board 21 B.

The glass flat board 20B is formed in a flat board fashion, and covers an interior surface (the upper surface of Fig. 11b) of the base board 21B.

The base board 21 B has hollow parts 210B and 211B at each end, and a plurality of grooves 212B and others between the above hollow parts 21 0B and 211B.

Of these hollow parts, the hollow part 210B has a pass-through opening 210Ba communicating with the inlet 10 at bottom surface, and forms an upstream side collection part 22B, which collects blood, between the hollow part 210B and the glass flat board 20B.

Similarly, the hollow part 211B has the a pass-through opening 211Ba communicating with the discharge part 11 at bottom surface, and forms a downstream side collection part 23B, which collects blood, between the hollow part 211 B and the glass flat board 20B.

A plurality of grooves 212B and others are arranged so as to be extended parallel to a direction between the hollow part 210B and the hollow part 211B (in the X direction given in the figure), and is in a state that they are divided by a terrace part 213B, which is extended in the above-described X direction. These plurality of grooves 212B and others are alternately communicated with the hollow part 210B or the hollow part 211B, and with this configuration, an upstream side blood circuit 24B which allows blood to flow from the upstream side collection part 22B, and a downstream side blood circuit 25B which allows blood to flow from the downstream side collection part 23B are formed under the glass flat board 20B.

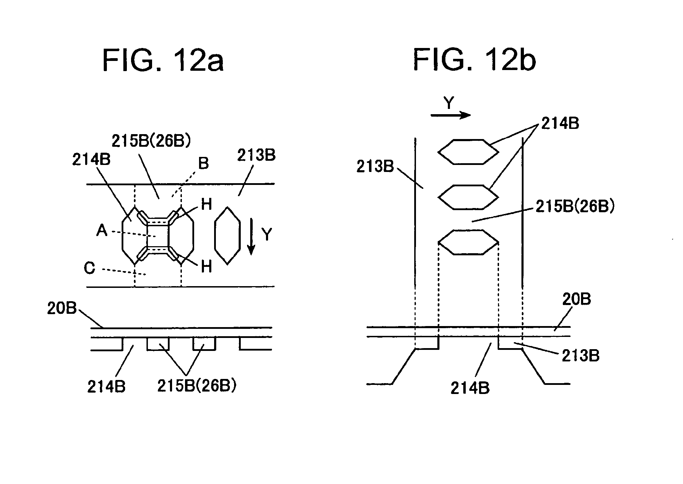

On the upper end of the terrace part 213B, as shown in Fig. 11c and Fig. 12, a plurality of hexagonal banks 214B are arranged in the X direction, and their top surfaces are made close contacts with the glass flat board 20B. These plural number of bank parts 214B form gates 215B between each of the two bank parts. And these gates 215B form fine channels 26B, which flow blood in the Y direction in the figure, between the gates 215B and the glass flat board 20B. Namely, by joining the base board 21 B having gates 215B on its surface as fine grooves and the glass flat board 20B having a flat part, which makes a close contact with the surface of the base board 21 B, the above channels 26B become spaces formed by these gates 215B and the flat part. However, these channels 26B may be a whole space formed in the following manner: two hollow parts 210B and 211B are arranged parallel, which parts have the pass-through opening 210Ba at one end as an inflow entrance of blood, and have the pass-through opening 211Ba at the other end as an outflow exit; and, at a wall part dividing these hollow parts 210B and 211B into each other, the base board 21B having a gate 215B as a fine groove communicating hollow parts 210B and 211B with each other in the Y direction, and the glass flat board 20B having a flat part, which is made contact with the surface of the base board 21 B are joined or pressure bonded. The cross section of the channel 26B is smaller than that of the upstream side blood circuit 24 or the downstream side blood circuit 25, but is not particularly limited to it.

The channel 26B is arranged in the inner area A of the gate 215B, whose inner size is smaller than a blood cell size, and in front of and behind the inner area A in the Y direction, and has the entrance area B and the exit area C located upstream and downstream of the gate 215B whose cross section is larger than that of the aforesaid inner area A. In addition, the joining part between the inner area A and the entrance area B, and the joining part between the inner area A and the exit area C are the stress change area H, which affects blood existing in the interior of the channel 26B. Namely, it is assumed that the change in stress is caused by an existence of the inner area A of the gate 215B through which a blood cell is unable to pass without being deformed. The inner size of the gate 215B is preferably about 1 µm to about 10 µm, and more preferably about 5 µm to about 10 µm.

In such microchip 2B, blood introduced from the inlet 10 is collected in the upstream collection part 22B, and after passing through the channel 26B and the downstream side blood circuit 25B from the upstream side blood circuit 24B, the blood is collected in the downstream side collection part 23 B to be discharged from a discharge part 11. In more detail, as shown in Fig.12, a blood cell in blood flowing the channel 26B, for example a red blood cell, at first passes through the entrance area B located upstream of the gate 215B, after which passes through the inner area A of the gate 215B while being deformed, and then, at last passes through the exit area C located downstream of gate 215B. As such the microchip 2B, microchips disclosed in Japanese Patent Application No. 2005-265634, or Japanese Patents No. 2,532,707 and No. 2,685,544 can be used.

The region that the TV camera 6B takes a picture includes the inner area A, the entrance area B, and the exit area C of the gate 215B. However, the TV camera 6B may take at least a picture of blood flow in front of and behind the change area H in the Y direction. Namely, the region of taking a picture may be a region including at least a joining part between the inner area A and the entrance area B, or a joining part between the inner area A and the exit area C. The above TV camera 6B is, in other points, constituted in a similar manner to that of the TV camera 6 in the above-described embodiment, but it may have a low frame rate similarly to the first modified example of the embodiment.

Next, the blood fluidity determined by the blood fluidity measurement system 1B will be exemplified. The measurement method of the fluidity is carried out in a similar manner to that of the above-described embodiment or the first modified example of the embodiment.

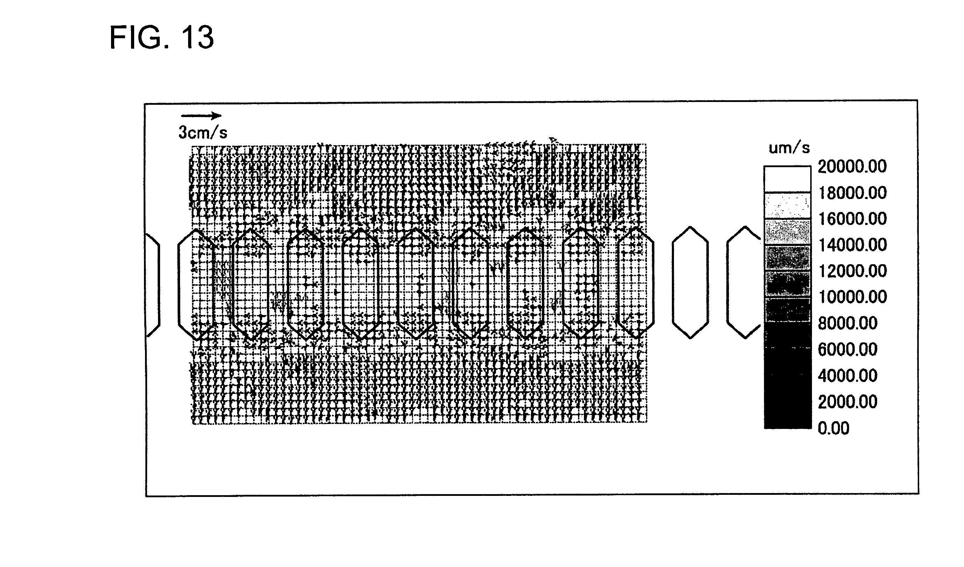

Fig. 13 and Tables 2 to 4 show an example, in which speed vectors as the blood fluidity were determined. Fig. 13 shows an example of calculated speed vectors displayed on a display, Table 2 shows a blood speed in each of areas A to C at each gate 215B, and Tables 3 and 4 show a direction of blood (an angle) at each gate 215B. The angles in Tables 3 and 4 are shown in the similar points to those for angles in Table 1. As shown in Fig. 13, it is found that the speed change (density change in the figure) is large at joining parts of each of areas A to C, that is, in the vicinity of the stress change area H.

**Table 2**

| Speed (µm/sec) | | | |
|---|---|---|---|
| Gate No. | Entrance area B | Inner area A | Exit area C |
| 1 | 5891 | 12269 | 4858 |
| 2 | 2662 | 13336 | 5007 |
| 3 | 4243 | 10511 | 4476 |
| 4 | 5704 | 11142 | 3855 |
| 5 | 5356 | 12825 | 5049 |
| . . . | . . . | . . . | . . . |
| . . . | . . . | . . . | . . . |
| Average | 4771 | 12017 | 4649 |
| Dispersion | 1340 | 1171 | 497 |

**Table 3**

| | Angle (degree) Entrance area B | | |
|---|---|---|---|
| Gate No. | Left side | Center | Right side |
| 1 | 6 | 0.1 | -5 |
| 2 | 5 | 0.1 | -4 |
| 3 | 4 | -0.2 | -4 |
| 4 | 4 | 0.0 | -6 |
| 5 | 6 | 0.0 | -3 |
| . . . | . . . | . . . | . . . |
| . . . | . . . | . . . | . . . |
| Average | 5.0 | 0.0 | -4.4 |
| Dispersion | 1 | 0.12 | 1.14 |

**Table 4**

| | Angle (degree) Exit area C | | |
|---|---|---|---|
| Gate No. | Left side | Center | Right side |
| 1 | 10 | 0 | -9 |
| 2 | 12 | 0.1 | -10 |
| 3 | 8 | 0.2 | -12 |
| 4 | 10 | -0.1 | -7 |
| 5 | 7 | 0.1 | -8 |
| . . . | . . . | . . . | . . . |
| . . . | . . . | . . . | . . . |
| Average | 9.4 | 0.06 | -9.2 |
| Dispersion | 1.95 | 0.11 | 1.92 |

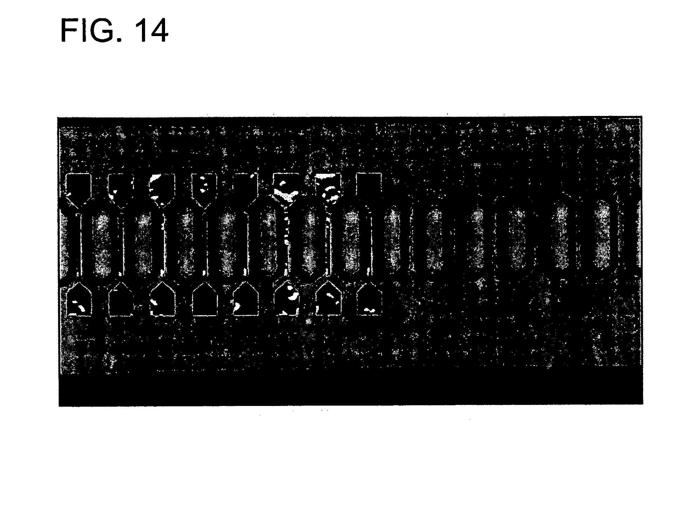

Fig. 14 and Table 5 show an example, in which a degree of aggregation of blood cells as the blood fluidity was determined. Fig. 14 shows an example, in which aggregation parts at the areas A to C of the gate 215B are obtained after blood flow images were processed, and black painted parts in the figure show target parts for image processing, and white parts in the black painted parts show an aggregated part. Table 5 shows an example, in which an area ratio of aggregation was calculated as a degree of aggregation at each of areas A to C in each gate 215B. As shown in Fig. 14, aggregation is likely to occur at joining parts of each of areas A to C, that is, in the vicinity of the stress change area H.

**Table 5**

| | Area ratio of aggregation (%) | | |
|---|---|---|---|
| Gate No. | Entrance area B | Inner area A | Exit area C |
| 1 | 2.4 | 1.3 | 7.7 |
| 2 | 4.2 | 4.4 | 1.2 |
| 3 | 15.8 | 12.1 | 6.2 |
| 4 | 5.5 | 4.4 | 0.0 |
| 5 | 7.9 | 1.3 | 5.6 |
| 6 | 28.5 | 23.7 | 15.8 |
| 7 | 12.7 | 23.8 | 5.4 |
| 8 | 6.7 | 0.0 | 4.0 |
| Average | 10.5 | 8.89 | 5.74 |
| Dispersion | 8.52 | 9.9 | 4.81 |

As described above, according to the blood fluidity measurement system 1B, similar effects to those of the above-described embodiment and the first modified example thereof are naturally obtained, and further, since the channel 26B has the stress change area H, which affects blood in the channel, and the TV camera 6B takes a picture of blood flow in front of and behind the change area H in the Y direction, the state of blood flow can be detected at positions where aggregation is likely to occur. Therefore, the various aspects of the state of blood flow can be detected.

The channel 26B is arranged in the inner area A of the gate 215B, whose inner size is smaller than a blood cell size, and in front of and behind the inner area A in the Y direction, and has the entrance area B and the exit area C located upstream and downstream of the gate 215B, whose cross section is larger than that of the aforesaid inner area A, and the change area H is a joining part between the inner area A and the entrance area B or the exit area C. Therefore, the channel 26B reproduces a stress change area of blood in a blood vessel in a pseudo manner, whereby the state of blood flow can be detected in font of and behind the change area.

In the second modified example of the above-described embodiment, both of the joining part between the inner area A and the entrance area B and the joining part between the inner area A and the exit area C are designated as the stress change area H, but the joining part between the channel 26B and the upstream side blood circuit 24 or the downstream side blood circuit 25 may be designated as the aforesaid change area H.

Further, in other points, the present invention is not limited to the above-described embodiment and the modified examples thereof, and naturally it can appropriately be modified.

## Claims

1. A blood fluidity measurement system to measure blood fluidity by flowing blood in a channel, the blood fluidity measurement system comprising: an imaging means for taking an image of a blood flow in the channel; and a blood flow state detection means for detecting a state of blood flow in the channel, as blood fluidity, from the image obtained by the imaging means.

2. The blood fluidity measurement system described in Claim 1, wherein the channel comprises a plurality of gates formed with a narrower width than a blood cell diameter; the imaging means takes an image of blood flow at an exit area of at least one of the gates, and the blood state detection means detects the state of blood flow at the exit area, as blood fluidity.

3. The blood fluidity measurement system described in Claim 2, wherein the blood flow state detection means detects a motion of blood cells in blood at the exit area, and then, obtains a speed vector of the a blood cells as the state of blood flow.

4. The blood fluidity measurement system described in Claim 2, wherein the blood flow state detection means detects, as a line, a boundary between a portion containing blood cells and a portion without a blood cell among the above exit areas, and then, obtains an angle between the line and a center line of the above gate, as the state of blood flow.

5. The blood fluidity measurement system described in Claim 2, wherein the blood flow state detection means recognizes both of an area of a portion containing blood cells and an area of a portion without a blood cell among the above exit areas by a color difference of each of both areas, and obtains an area ratio of the both areas as the state of blood flow.

6. The blood fluidity measurement system described in any one of Claims 3 to 5, comprising a conversion means, which converts the state of blood flow to a time required for a prescribed amount of blood to pass through the gates, a transformability of blood cells, or viscosity of blood.

7. The blood fluidity measurement system described in Claim 1, wherein the channel has a stress change area, which affects internal blood, and the imaging means takes an image of the blood flow in front and behind of the change area in a direction of the blood flow.

8. The blood fluidity measurement system described in Claim 7, wherein the channel has a smaller diameter channel, whose internal diameter is smaller than a diameter of blood cell size, and larger diameter channels, which are arranged in front and behind of the smaller diameter channel in the direction of the blood flow and have a larger cross section than that of the aforesaid smaller diameter channel, and the change area is a joining part between the smaller diameter channel and the large size channel.

9. The blood fluidity measurement system described in Claim 7 or Claim 8, wherein the blood flow state detection means obtains, as the state of blood flow, at least one of blood speed, a blood flow direction, and a degree of aggregation of blood cells in front and behind of the change area.

10. The blood fluidity measurement system described in any one of Claims 7 to 9, comprising:
a first substrate comprising fine grooves on a surface thereof; and
a second substrate including a flat surface portion contacting closely with the surface of the first substrate,
wherein the channel is a space formed between the fine grooves and the flat surface portion, by joining the first substrate and the second substrate.

11. The blood fluidity measurement system described in any one of Claims 7 to 9, comprising:
a first substrate including a plurality of hollows which are arranged side by side, the plurality of hollows each of which has an inflow entrance at one end and an outflow exit at an other end, and including the fine grooves communicating with the hollows each other in a direction almost perpendicular to a straight line between the inflow entrance and the outflow exit, at a wall section dividing the hollows each other; and
a second substrate which comprises a flat surface portion contacting closely with a surface of the first substrate,
wherein the channel is a space formed with the plurality of hollows, the fine grooves and the flat surface portion, by joining or pressure bonding the first substrate and the second substrate.

12. The blood fluidity measurement method for measuring blood fluidity using the blood fluidity measurement system described in any one of Claims 1 to 11.
